# EUROPEAN PATENT APPLICATION

(11) **EP 4 678 539 A1**
(43) Date of publication of application: **14.01.2026**
(21) Application number: 24187404.9
(22) Date of filing: 09.07.2024
(51) Int. Cl.: B64U 30/29, B64U 10/13, B64U 20/60, B64U 50/19

(54) **UNMANNED AERIAL VEHICLE COMPRISING STRUCTURAL ARM MEMBERS**

(71) Applicant: Skansen Technologies AB, 111 48 Stockholm (SE)
(72) Inventor: von Konow, Johan, 111 48 Stockholm (SE); Pettersson, Thorbjörn, 111 48 Stockholm (SE)
(74) Representative: AWA Sweden AB

(57) **Abstract**

There is provided an UAV (100), comprising a body (110) and structural arm members (120), each of the structural arm members connected to the body at a first end (130) of said structural arm member. Each of the structural arm members comprises structural bars (140). The UAV further comprises motors (150), each of the motors arranged at a second end (160) of a corresponding structural arm member. The UAV further comprises a power source (170) arranged in the body and configured to supply power to the motors via the structural arm members. The UAV also comprises propulsion arrangements (180) configured to aerially manoeuvre the UAV. Each of the propulsion arrangements is arranged at the second end of the corresponding structural arm and configured to be powered by a corresponding motor. The structural bars are electrically conductive and the structural arm members are arranged to provide structural integrity to the UAV.

## Description

### FIELD OF THE INVENTION

The present invention generally relates to an unmanned aerial vehicle, UAV. More specifically, the present invention relates to a UAV comprising structural arm members.

### BACKGROUND OF THE INVENTION

Unmanned aerial vehicles, UAVs, commonly known as drones, are aircraft without a human pilot and have been in use for several decades. They may be controlled remotely by a user or can fly autonomously by onboard control systems. The use of drones spans various fields, from military surveillance to civilian delivery services.

A crucial issue with the drones of today is their flight time being relatively short. The limited flight duration of a drone may be due to limitations to the battery in terms of energy density and capacity, substantial power consumption, excessive payload, and/or aerodynamic resistance. Hence, there are ongoing efforts across various fields to enhance the capacity of the drone including developing high-energy density batteries, improving power efficiency in high power consumers such as the motor and propellor of the drone, optimizing aerodynamic design, as well as utilizing lightweight materials such as carbon fibre and various polymers in the manufacturing process.

Nonetheless, these improvements may be complex, expensive, less durable, and/or high maintenance. For example, opting for a relatively thin design of the drone to decrease the weight and consequently extend the flight time, but ultimately resulting in a more fragile drone structure. Based on the above, it is desirable to further improve the durability, functionality, and/or complexity of a drone.

### SUMMARY OF THE INVENTION

It is an object to at least partially mitigate, alleviate, or eliminate one or more of the above-identified deficiencies in the art and disadvantages singly or in any combination and solve at least the above-mentioned problem.

This and other objects are achieved by providing a UAV having the features in the independent claim. Preferred embodiments are defined in the dependent claims.

Hence, according to the present invention, there is provided an unmanned aerial vehicle, UAV, comprising a body, and a plurality of structural arm members extending from the body, each of the plurality of structural arm members is connected to the body at a first end of said structural arm member, wherein each of the plurality of structural arm members comprises a plurality of structural bars. The UAV further comprises a plurality of motors, wherein each of the plurality of motors is arranged at a second end of a corresponding structural arm member of the plurality of structural arm members, and a power source arranged in the body and configured to supply power to the plurality of motors via the plurality of structural arm members. Also, the UAV comprises a plurality of propulsion arrangements configured to aerially manoeuvre the UAV, wherein each of the plurality of propulsion arrangements is arranged at the second end of a corresponding structural arm member of the plurality of structural arm members and configured to be powered by a corresponding motor of the plurality of motors. The plurality of structural bars is electrically conductive, and the plurality of structural arm members is arranged to provide structural integrity to the UAV.

Thus, the present invention is based on the concept or idea of providing a UAV comprising a plurality of structural arm members which are electrically conductive via structural bars, and which provides structural integrity to the UAV. Furthermore, a power source of the drone is configured to supply power to a plurality of motors of the drone via the plurality of structural arm members. In other words, the present invention provides for an UAV comprising a structural load bearing function which is integrated with energy transmission to power the UAV. Hence, the present invention allows increased durability of the UAV, whilst also improving efficiency in terms of at least energy consumption, operation, resources, cost, manufacturing, and/or transporting.

The present invention is advantageous in that the UAV comprises a plurality of structural arm members. Hence, the plurality of structural arm members contributes to the structural integrity of the UAV. The plurality of structural arm members may enable an increased load capacity of the UAV. This is desirable as it provide for a more robust and durable UAV. Hence, the UAV may require less maintenance, which may be especially beneficial if the UAV is operating in a remote location where charging and/or maintenance opportunities may be scarce, and/or where it is crucial to improve the flight time of the drone. Hence, the present invention may provide for a more adaptable and versatile UAV in terms of different operational needs, requirements, and/or desires.

The present invention is further advantageous in that each of the plurality of structural arm members comprises a plurality of structural bars. Hence, each structural arm member may comprise two or more structural bars. This is favourable as the plurality of structural bars of each structural arm member allows for an increased structural integrity of the structural arm members, and thus the structural integrity of the UAV. For example, load distribution may be distributed more evenly along the arm member, thus increasing strength and/or stability of the arm member. Also, the present invention provides redundancy in that if one structural bar of a structural arm member fails, the load may be redistributed through the surrounding structural bars. Hence, the present invention may enhance the reliability and overall safety of the UAV. Furthermore, the plurality of structural bars may enable for more complex and optimized designs of the structural arms and/or the UAV, compared to having one single component.

It should be noted that the power source arranged in the body is configured to supply power to the plurality of motors via the plurality of structural arm members. It should also be noted that the plurality of structural bars of the plurality of structural arm members is electrically conductive. Hence, the structural arm members are configured to transfer power from the power source to the plurality of motors. This is desirable as the structural arm members provide for both structural load bearing function and energy transfer. Therefore, the weight of the UAV may be reduced, compared to for example other UAV's requiring additional wiring for necessary energy transfer. The reduced weight allows for a more energy efficient UAV, i.e., consuming less energy. Therefore, the flight duration may be increased, providing for a more versatile UAV in terms of operational needs, requirements, and/or desires of for example a user.

The present invention is further advantageous in that the electrically conductive and structural reinforcing arm members enables more flexible and versatile design options of the UAV. As mentioned above, the present invention is of no need of (exposed) wiring, which may require protection, in order to transfer energy from a power source to energy consumers such as a motor and/or propellors. Thus, the present invention allows for an UAV comprising relatively few components. The relatively low number of components is advantageous in that the UAV may be relatively inexpensive and non-complex to fabricate. Hence, the bill of materials, BOM, and/or the production cost of the UAV may be reduced. Moreover, the low number of components of the UAV implies a simplified or facilitated production, handling, and/or transporting compared to UAV's comprising a relatively high number of components. Also, the relatively few components may facilitate for mass production of the UAV. Having relatively few components of the UAV is further advantageous in that the risk of failure reduces. Consequently, the mean time between failures, MTBF, may be increased. This may further reduce the need of maintenance of the UAV, allowing for an increased overall quality of the UAV.

Providing an UAV with a more flexible and versatile design may also be beneficial in terms of aerodynamical efficiency of the UAV. For example, wiring for energy transfer of prior UAV's may have to be routed along or inside arms of the UAV for protection criterion, thus restricting the overall design of the UAV. Instead, the present invention allows for an UAV comprising a plurality of structural arm members wherein each of the plurality of structural arm members comprises a plurality of structural bars. This allows designing an UAV with the purpose of e.g., optimizing its aerodynamics in terms of energy efficiency.

There is provided an UAV comprising a plurality of structural arm members. By "structural arm members", it is here meant any part, element, component, structure, or the like, able to contribute to the structural integrity of the UAV. The structural arm members contribute to the overall stability and strength of the UAV and may support resulting loads and distribute forces. Furthermore, each of the plurality of structural arm members comprises a plurality of structural bars. By "structural bars", it is here meant any part, element, component, or the like, capable of contributing to the structural integrity of the structural arm member and/or the UAV. The structural bars may improvingly distribute loads and forces of the structural bars and of the structural arm member. The structural bars may contribute to an increased load bearing capacity of the UAV, and/or an increased durability and longevity of the UAV. The UAV further comprises a plurality of propulsion arrangement configured to aerially manoeuvre the UAV. By "propulsion arrangement", it is here meant an arrangement, system, configuration, structure, or the like capable of generating propulsion to the UAV. For example, the propulsion arrangement(s) may provide thrust and lifting power to the UAV.

According to an embodiment of the present invention, each of the plurality of structural bars of each of the plurality of structural arm members may extend from the first end of said structural arm member to the second end of said structural arm member. This is advantageous in that the structural bars of each structural arm member may extend along a length direction of said structural arm member. Therefore, the structural bars of each structural bar member may contribute to an increased strength and/or stiffness of said structural arm member. For example, the plurality of structural arm members may be more resistant to bending and/or deformation under load. Furthermore, the arrangement of the structural bars of each structural arm member may allow for a more uniform load distribution. For example, the plurality of structural arm members may benefit from reduced stress concentrations. According to an example, (only) one or more structural bar of the plurality of structural bars of each structural arm member of the plurality of structural arm members may extend from the first end of said structural arm member to the second end of said structural arm member.

According to an embodiment of the present invention, each of the plurality of structural bars of each of the plurality of structural arm members may at least partially be separately arranged each other structural bar of said plurality of structural bars. Hence, according to the embodiment, the plurality of structural bars of a structural arm member does not (fully) abut each other along the structural arm member. In other words, there is a distance, separation, gap, space, or the like between each structural bar of the plurality of structural bars of a structural arm member. This is advantageous in that the aerodynamical efficiency of the UAV may be improved. For example, the air resistance of the UAV may be reduced, as the plurality of structural bars of each structural arm member may at least partially be separated from each other. In other words, the arrangement of the structural bars according to the present embodiment may allow air to pass through between the structural bars. The UAV may therefore benefit from increased flight efficiency, thus increasing flight time of the UAV.

According to an embodiment of the present invention, the motor may be an electrical motor, and the power source may be an electrical power source. The embodiment is advantageous in that it provides for an UAV with a reduced negative impact on the environment. For example, an electrical motor and/or an electrical power source may reduce the carbon footprint compared to using a combustion engine to power an UAV. Also, the present embodiment may result in a weight decrease of the UAV, compared to alternative solutions as internal combustion engines. Hence, the flight time may be prolonged. The present embodiment may also provide for a more energy efficient UAV. For example, the electrical motor may convert a higher percentage of electrical energy into mechanical power compared to a combustion engine. Hence, the flight time of the UAV may be further increased. Also, the overall performance and user experience of the UAV according to the present embodiment may be improved in terms of the electrical motor providing instant torque, allowing for rapid acceleration and precise control and stability.

According to an embodiment of the present invention, the plurality of structural bars of each of the plurality of structural arm members may form a truss-shaped structure. The present embodiment is advantageous in that the truss-shaped structure of the structural bars allows for an increased strength-to-weight ratio. Hence, less material may be used without reducing the load-bearing capability. Consequently, the weight of the UAV may be reduced, and the flight time increased. Furthermore, the ability of the UAV to withstand loads may be improved as bending moments and/or shear forces may be minimized due to the structural arm members comprising a plurality of structural bars.

According to an embodiment of the present invention, the plurality of structural bars of each of the plurality of structural arm members may form a tetrahedral-shaped structure. In other words, each plurality of structural bars may form a three-dimensional framework in the shape of a tetrahedral. The present embodiment is advantageous in that the tetrahedral-shaped structure of each plurality of structural bars contribute to the corresponding structural integrity of the structural arm member. For example, the tetrahedral shape distributes loads evenly across its structure. Consequently, the present embodiment contributes to an increased durability and stability of the UAV. Furthermore, the present embodiment provides redundancy in that if one structural bar of a structural arm member fails, the load may be redistributed through the surrounding structural bars. Hence, the present embodiment may enhance the reliability and overall safety of the UAV.

According to an embodiment of the present invention, the plurality of structural bars of each of the plurality of structural arm members may be made of metal. According to an example, said metal comprises aluminium. The present embodiment is advantageous in that it allows for a relatively small weight contribution of the plurality of structural bars to the overall weight of the UAV, compared to other relevant materials such as composites. According to another example, said metal comprises steel and/or copper. The present embodiment is favourable as a decrease in the weight of the UAV allows for a decrease in required power to stay aloft. Hence, the flight time of the UAV may increase.

According to an embodiment of the present invention, each of the plurality of structural bars of each of the plurality of structural arm members may be one of a rod and a tube. Hence, a structural arm member may comprise at least one structural bar which is formed as a rod, and/or at least one structural bar which is formed as a tube. The present embodiment is advantageous in that it provides for a more versatile and adaptable UAV in terms of different functional and operational needs, requirements, and/or desires. For example, all the structural bars of all the structural arm members may be shaped as a tube. According to the present embodiment, the strength-to-weight ratio may be increased. In other words, the structural arm members comprising the structural bars may withstand higher loads in relation to the total weight. A decreased weight in an UAV without lowering the load bearing capability is beneficial as the flight time may be improved without lowering the durability and strength of the UAV.

According to an embodiment of the present invention, each of the plurality of structural bars of each of the plurality of structural arm members may comprise an encapsulant covering at least a portion of said structural bar. Hence, each structural bar may be partially, or fully, covered by an encapsulant. The present embodiment is advantageous in that the encapsulant may provide for a protection, barrier, boundary, or the like to each structural bar of each structural arm member from environmental and/or mechanical protection such as moisture, chemicals, impacts, abrasion, etc. Hence, the operational lifespan and/or reliability of consistent performance of the UAV may be improved. Furthermore, as the structural bars of the structural arm members are electrically conductive, it may be beneficial to encapsule each structural bar in the encapsulant to reduce the risk of short circuits, i.e., the structural bars may be separated from each other. In other words, the encapsulant may function as an electrical insulation. By "encapsulant", it is here meant any material, element, arrangement, or the like, which is configured or arranged to cover, surround, encapsulate, and/or enclose at least a portion of each of the structural bars of each of the structural arm members. The encapsulant may thus increase safety of the UAV during assembly, transportation, and/or operation.

According to an embodiment of the present invention, at least one of the connection between each of the plurality of structural arm members and the body at the first end of said structural arm member, and between each of the plurality of structural arm members and each of the plurality of motors at the second end of said structural arm member, may be achieved by at least one of screwing, clamping, pressing, crimping, soldering, and welding. Hence, the structural arm members may be connected to the body by screwing, clamping, pressing, crimping, soldering, and/or welding. Furthermore, each motor may be connected to a corresponding structural arm member by screwing, clamping, pressing, crimping, soldering, and/or welding. The present embodiment is advantageous in that the durability of the UAV may be increased. Furthermore, the present embodiment enables a reliable and secure (electrical) connection between a structural arm member and the body, as well as between a structural arm member and a corresponding motor. Hence, the suppliance of power from the power source to the plurality of motors via the plurality of structural arm members may be more energy efficiency and reliable.

According to an embodiment of the present invention, the connection between each of the plurality of structural arm members and the body at the first end of said structural arm member may comprise a bent portion of each of the plurality of structural bars of said structural arm member. In other words, the connection at the first end of a structural arm member, between the structural arm member and the body, may comprise a bent portion of each structural bar of the plurality of structural bars. The present embodiment is advantageous in that the bent portion of a structural bar may allow for a more secure, stable, reliable, safe, firm, etc., connection between a structural arm member and the body. In other words, the bent portion of a structural bar may hinder, impede, prevent, etc., the structural bar, and consequently the corresponding structural arm member, to unintentionally disconnect from the body. This is favourable as the bent portion of the structural bar may provide for a more durable and reliable UAV.

According to an embodiment of the present invention, the UAV may comprise a control unit configured to generate control signals based on control data, and at least one electronic speed controller, ESC, configured to receive the control signals from the control unit and configured to control the plurality of motors based on the control signals. Hence, the control unit may generate control signals, and the ESC may receive said control signals in order to, based on said control signals, control the plurality of motors. The present embodiment is advantageous in that the combination of the control unit and the ESC allows for a well-coordinated, efficient, and flexible UAV which may improve the overall performance, reliability, and maintainability of the UAV. Therefore, the present embodiment enables a more smooth, precise, responsive, or the like, flight experience for a user.

According to an embodiment of the present invention, the control unit may be configured to receive the control data from a remote transmitter, wherein the control data may be configured to control the UAV. For example, the remote transmitter may be a (remote) handheld device and/or a ground station, controlled by e.g., a user. The present embodiment is advantageous in that the control unit enables for a more adaptable and versatile UAV in terms of different operational needs, requirements, and/or desires. For example, the remote transmitter may control the UAV with an improved precision by e.g., enabling more precise manipulation of the movement of the UAV and/or faster response from the UAV based on the control data from the remote transmitter. Hence, the present invention may provide for a more adaptable and versatile UAV in terms of different operational needs, requirements, and/or desires.

According to an embodiment of the present invention, at least one of the plurality of structural bars of each of the plurality of structural arm members may be configured to transmit the controls signals to the at least one ESC. In other words, one or several structural bar(s) of each structural arm member may be configured to transmit the control signals from the control unit to the ESC(s). The present embodiment is advantageous in that the control signals to the ESC(s) may be transmitted by (a) structural bar(s). Therefore, the present embodiment is of no need of (exposed) wiring, which may require protection, to transmit control signals to the ESC. Thus, the UAV according to the present embodiment may comprise relatively few components. The redundant of additional wiring is advantageous in that overall weight of the UAV may be reduced, allowing for a more energy efficient UAV. The relatively low number of components further allows for a reduced economical cost and/or a non-complex production, handling, transporting, etc., of the UAV.

According to an example, at least one of the plurality of structural bars of the plurality of structural arm members may be configured to at least one of transmit and receive data. Put it differently, at least one structural bar may function as an antenna. This is advantageous in that data transmitted to and/or from the UAV may be transmitted by (a) structural bar(s). Hence, at least one structural bar may contribute to the structural integrity of the UAV, while simultaneously enable transmission and/or reception of data. Therefore, there is no need of extra (exposed) antennas to achieve reliable communication between the UAV and for example an (external) transmitter.

According to an embodiment of the present invention, at least one of the plurality of structural bars of each of the plurality of structural arm members may be configured to supply power to a corresponding motor of the plurality of motors. In other words, one or several structural bar(s) of each structural arm member may be configured to supply power to a corresponding motor. The present embodiment is advantageous in providing a versatile and adaptable UAV regarding powering the UAV. For example, if several structural bars of a structural arm member are configured to supply power to a corresponding motor, redundancy is introduced in that if one structural bar fails to supply power to the motor, the other structural bar may still ensure a reliable power supply. According to another example, if one or a few structural bar(s) of (a) structural arm member(s) is (are) configured to supply power to a corresponding motor, the other structural bar(s) of the associated structural arm member may assist the UAV in other manners. For example, one or more structural bar(s) of (a) structural arm member(s) may be configured to supply power to a corresponding power, wherein one or more structural bar(s) of the same structural arm may be configured to transmit control signals to e.g., an ESC.

Further objectives of, features of, and advantages with, the present invention will become apparent when studying the following detailed disclosure, the drawings, and the appended claims. Those skilled in the art will realize that different features of the present invention can be combined to create embodiments other than those described in the following.

### BRIEF DESCRIPTION OF THE DRAWINGS

This and other aspects of the present invention will now be described in more detail, with reference to the appended drawings showing embodiment(s) of the invention.
Fig. 1 schematically shows a perspective view of an UAV according to an exemplifying embodiment of the present invention,
Fig. 2 schematically shows a perspective view of a selected portion of an UAV, together with a blow-up view of a further selected portion of the UAV, according to an exemplifying embodiment of the present invention,
Fig. 3 schematically shows a perspective view of a selected portion of an UAV according to an exemplifying embodiment of the present invention.

### DETAILED DESCRIPTION

The present invention will now be described more fully hereinafter with reference to the accompanying figures, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

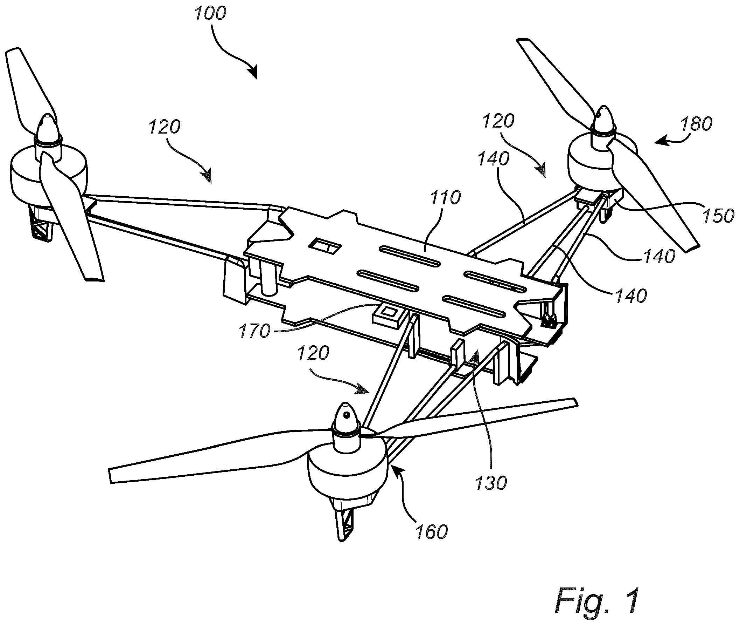

Fig. 1 schematically shows a perspective view of an UAV 100 according to an exemplifying embodiment of the present invention.

In Fig. 1, an unmanned aerial vehicle 100, UAV, is disclosed, comprising a body 110 and a plurality of structural arm members 120 extending from the body 110. For the sake of simplicity and conciseness, the UAV 100 in Fig. 1 comprises (exactly) three structural arm members 120 extending from the body 110, also referred to a frame, but it is to be understood that any number of a plurality is feasible, for example four structural arm members 120. The distribution and/or arrangement of the structural arm members 120 relative the body 110 may also vary. For example, the structural arm members 120 may be arranged relative the body 110 at an angle, i.e., obliquely arranged relative the body 110. The arrangement of the structural arm members 120 relative the body 110 may be uniform or non-uniform.

Each structural arm member 120 of the plurality of structural arm members 120 is connected to the body 110 at a first end 130 of said structural arm member 120, wherein each structural arm member 120 of the plurality of structural arm members 120 comprises a plurality of structural bars 140. According to an example, the plurality of structural bars 140 of each structural arm member 120 of the plurality of structural arm members 120 is connected to the body 110 at the first end 130 of said structural arm member 120. According to Fig. 1, each structural arm member 120 comprises (exactly) three structural bars 140, but it is to be understood that any number of a plurality is feasible. Furthermore, each plurality of structural bars 140 of each structural arm member 120 forms a pyramid-like structure according to Fig. 1. This allows for a durable and stable structural arm member 120. It should be noted that other shapes of the pluralities of structural bars 140 are equally feasible. According to an example, the plurality of structural bars 140 of each of the plurality of structural arm members 120 forms a truss-shaped structure. According to another example, the plurality of structural bars 140 of each of the plurality of structural arm members 120 forms a tetrahedral-shaped structure. According to yet another example, the plurality of structural bars 140 of each of the plurality of structural arm members 120 is interlaced, intertwined, braided, woven, or the like in respect to each other. It is to be understood that any combination of any of the arrangements of the structural bars 140 mentioned herein is conceivable. The above-mentioned examples of the arrangement of the structural bars 140 of each structural arm members 120 may be chosen based on the amount of load, applied force, torque, and/or stresses.

The UAV 100 further comprises a plurality of motors 150, wherein each motor 150 of the plurality of motors 150 is arranged at a second end 160 of a corresponding structural arm member 120 of the plurality of structural arm members 120. Hence, as depicted in Fig. 1, each structural arm member 120 comprises a corresponding motor 150 arranged thereto at a second end 160 of said structural arm member 120. Thus, the motors 150 are arranged on an opposite end of the structural arm members 120 compared to the body 110.

As disclosed in Fig. 1, the UAV 100 further comprises a power source 170 arranged in the body 110 and configured to supply power to the plurality of motors 150 via the plurality of structural arm members 120. Additionally, the plurality of structural bars 140 of each structural arm member 120 of the plurality of structural arm members 120 is configured to supply power to a corresponding motor 150 from the power source 170. This is achieved by the plurality of structural bars 140 being electrically conductive. Furthermore, the plurality of structural arm members 120 is arranged to provide structural integrity to the UAV 100. Hence, the structural arm members 120, and their corresponding structural bars 140, are configured to both provide structural integrity to the UAV 100, and to supply power to energy consumers, such as the motors 150. In other words, the present invention provides for an UAV 100 comprising a structural load bearing function integrated with energy transmission. Put differently, power is transferred to an energy consumer by elements holding the energy consumer in place relative the UAV 100.

Furthermore, the UAV 100 comprises a plurality of propulsion arrangements 180 configured to aerially manoeuvre the UAV 100, wherein each propulsion arrangement 180 of the plurality of propulsion arrangements 180 is arranged at the second end 160 of a corresponding structural arm member 120 of the plurality of structural arm members 120. Hence, each structural arm member 120 comprises a motor 150 and a propulsion arrangement 180 arranged at the second end 160 of said structural arm member 120. The propulsion arrangements 180 are configured to be powered by a corresponding motor 150 of the plurality of motors 150. Hence, each propulsion arrangement 180 is connected, coupled, or the like, to a corresponding motor 150.

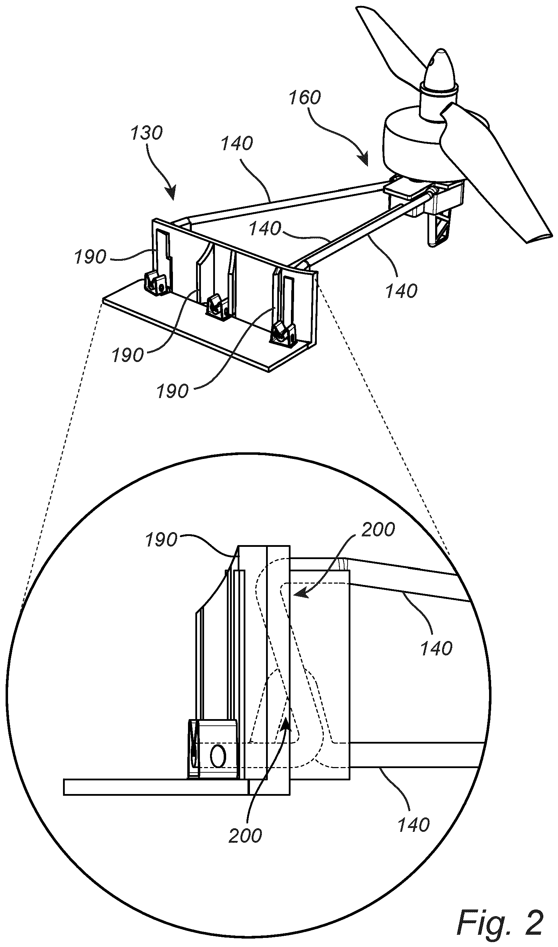

Fig. 2 schematically shows a perspective view of a selected portion of an UAV 100, together with a blow-up view of a further selected portion of the UAV 100, according to an exemplifying embodiment of the present invention. It should be noted that the UAV 100 shown in Fig. 2 has several features in common with the UAV 100 shown in Fig. 1, and some portions and references of the UAV 100 have been omitted in Fig. 2 for this reason. Hence, only a portion of the UAV 100 is visible in Fig. 2 for the sake of clarity and conciseness, for example only one structural arm member 120, along with a corresponding motor 150 and propulsion arrangement 180. Nonetheless, it should be understood that any of the following exemplifying embodiments may be applied to the UAV 100 visible in Fig. 1. It is therefore hereby referred to Fig. 1 and the associated text for an increased understanding of some of the features and/or functions of the UAV 100.

As seen in Fig. 2, each structural bar 140 of the plurality of structural bars 140 of each structural arm member 120 of the plurality of structural arm members 120 extends from the first end 130 to the second end 160 of said structural arm member 120. In other words, each plurality of structural bars 140 of each structural arm member 120 may extend along a length direction of the corresponding structural arm member 120. Nonetheless, it should be noted that other arrangements of the structural bars 140 are possible. For example, at least one structural bar 140 of a structural arm member 120 may be arranged to intersect, cross, or the like associated structural bars 140 in order to connect, join, or the like said associated structural bars 140 with each other, similar to a truss-shaped structure.

Also visible from Fig. 2, each structural bar 140 of the plurality of structural bars 140 of each structural arm member 120 of the plurality of structural arm members 120 is at least partially separately arranged each other structural bar 140 of said plurality of structural bars 140. Put it differently, each structural bar 140 is arranged with a distance to any other structural bar 140 of the associated plurality of structural bars 140. Hence, according to this exemplifying embodiment, the structural bars 140 do not intersect with each other, i.e., forming empty spaces, areas, gaps, etc., between each other. Hence, the present embodiment allows for air to flow between the structural bars 140 of each plurality of structural bars 140. Indeed, according to Fig. 2, each structural bar 140 is (fully) separately arranged each other structural bar 140 of the corresponding structural arm member 120.

Each structural bar 140 of the plurality of structural bars 140 of each structural arm member 120 of the plurality of structural arm members 120 comprises an encapsulant 190 covering at least a portion of said structural bar 140, as can be seen in Fig. 2. Hence, the encapsulant 190 may cover a structural bar 140 fully, or only cover a portion. The encapsulant 190 may comprise a material which is electrically insulating. As at least a portion of each structural bar 140 is covered by an encapsulant 190, the structural bars 140 may be isolated from each other. This is favourable as the structural bars 140 are electrically conductive. The encapsulant 190 may comprise for example plastic or silicone. According to an example, the structural bars 140 is joined, arranged, connected, coupled, or the like to the encapsulant 190 by insert moulding. According to the example, the encapsulant 190 may comprise plastic resin. Hence, the structural bars 140 may be moulded to the respective encapsulant 190. According to another example, the structural bars 140 may be separated from each other by screwing and/or clamping the structural bars 140 to the body 110. The encapsulant 190 may further strengthen the connection, attachment, or the like of the structural arm member 120 to for example the body 110. Thus, the encapsulant 190 may prevent or hinder the structural arm member 120 to accidentally and undesirable detach from the body 110.

The blow-up view of a further selected portion of the UAV 100 discloses how the connection between each structural arm member 120 of the plurality of structural arm members 120 and the body 110 at the first end 130 of said structural arm member 120 comprises a bent portion 200 of each structural bar 140 of the plurality of structural bars 140 of said structural arm member 120. Furthermore, is it visible from said blow-up view that the encapsulant 190 encloses the bent portion 200 of each structural bar 140. Hence, the bent portion 200 of a structural bar 140 may hinder, impede, prevent, etc., the structural bar 140, and consequently the respective structural arm member 120, to unintentionally disconnect from the body 110, compared to if the structural bar 140 would have been straight, i.e., not comprising a bent portion. The shape of the bent portion 200 of the structural bars 140 may take on other shapes than depicted in Fig 2, wherein two different shapes are disclosed for the sake of brevity and clarity.

Furthermore, even if not visible from Fig. 2, each structural bar 140 of the plurality of structural bars 140 of each structural arm member 120 of the plurality of structural arm members 120 is one of a rod and a tube. Hence, all the structural bars 140 may be shaped as a rod, or all the structural bars 140 may be shaped as a tube, or a combination of the two shapes may be present in a plurality structural bars 140. Hence, one or more structural bar(s) 140 may have a solid, circular cross-section and/or one or more structural bar(s) 140 may have a hollow, circular cross-section. Moreover, the plurality of the structural bars 140 of each structural arm member 120 of the plurality of structural arm members 120 is made of metal. For example, the structural bars 140 may be made of aluminium, steel, and/or copper.

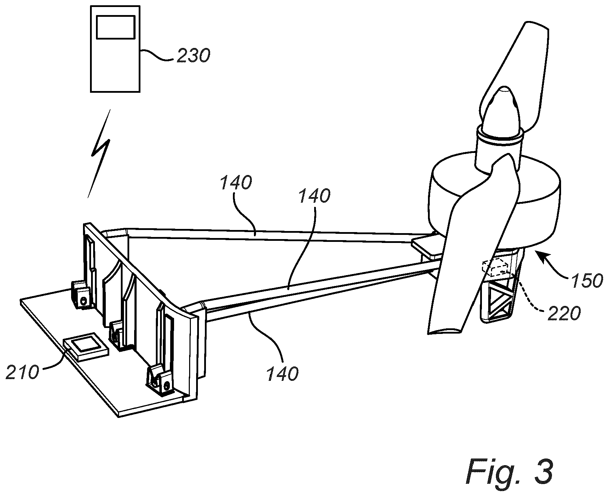

Fig. 3 schematically shows a perspective view of an UAV 100 according to an exemplifying embodiment of the present invention. It should be noted that the UAV 100 shown in Fig. 3 has several features in common with the UAV 100 shown in Figs. 1 and 2, and some portions and references of the UAV 100 have been omitted in Fig. 3 for this reason. Hence, only a portion of the UAV 100 is visible in Fig. 3 for the sake of clarity and conciseness, for example only one structural arm member 120, along with a corresponding motor 150 and propulsion arrangement 180. Nonetheless, it should be understood that any of the following exemplifying embodiments may be applied to the UAV 100 visible in Figs. 1 and 2. It is therefore hereby referred to Figs. 1 and 2, and the associated text, for an increased understanding of some of the features and/or functions of the UAV 100.

The motor 150 of the exemplifying embodiment of Fig. 2 is an electrical motor. For example, the motor 150 may be DC motor or a brushless motor. Furthermore, the power source 170 is an electrical power source. The power source 170 may be a (rechargeable) battery, such as a lithium-ion or a lithium-polymer battery.

At least one of the connection between each structural arm member 120 of the plurality of structural arm members 120 and the body 110 at the first end 130 of said structural arm member 120, and the connection between each structural arm member 120 of the plurality of structural arm members 120 and each motor 150 of the plurality of motors 150 at the second end 160 of said structural arm member 120, is achieved by at least one of screwing, clamping, pressing, crimping, soldering, and welding. In other words, the structural arm members 120 may be connected to the body 110 by screwing, clamping, pressing, crimping, soldering, and/or welding. Furthermore, the structural arm members 120 may be connected to a respective motor 150 by screwing, clamping, pressing, crimping, soldering, and/or welding. According to an example, both the connection of the first end 130 and the connection of the second end 160 of the structural arm members 120 relative the body 110 respective a motor 150 is achieved through clamping the respective end 130, 160 of the structural arm member 120 into a contact tab. This may be similar to how a fuse is secured in a fuse holder, ensuring both mechanical stability and electrical connectivity. According to another example, the respective ends 130, 160 of the structural arm members 120 may be pressed against a circuit board to achieve mechanical stability and electrical connectivity.

As seen in Fig. 3, the UAV 100 further comprises a control unit 210, also referred to as a flight controller, configured to generate control signals based on control data. The control data may be data comprising instructions received by the control unit 210 in terms of how to control the UAV 100. For example, the control data may comprise instructions of desired orientation, altitude, and/or velocity of the UAV 100. According to Fig. 3, the control unit 210 is further configured to receive the control data from a remote transmitter 230, wherein the control data is configured to control the UAV 100. The remote transmitter 230 may be e.g., a handheld device and/or a ground station, controlled by a user or by preprogrammed instructions.

The UAV 100 further comprises at least one electronic speed controller 220, ESC, configured to receive the control signals from the control unit 210. The at least one ESC 220 is further configured to control the plurality of motors 150 based on the control signals. The at least one ESC 220 may be configured to individually control each motor 150 of the plurality of motors 150. According to an example, an ESC 220 may be arranged in connection to a corresponding motor 150. In other words, each structural arm member 120 may comprise an ESC 220. The ESC(s) 220 may be configured to regulate the speed of the motors 150 by adjusting the amount of power supplied thereto. Hence, the ESC 220 may assist in controlling the movement and stability of the UAV 100. According to Fig. 3, the ESC 220 is arranged in connection to the motor 150, at the second end 160 of the structural arm member 120. It should be noted that the ESC 220 may be arranged at various locations of the UAV 100, for example along the structural arm member 120 or in the body 110.

According to Fig. 3, at least one structural bar 140 of the plurality of structural bars 140 of each structural arm member 120 of the plurality of structural arm members 120 is configured to transmit the controls signals to the at least one ESC 220. Furthermore, at least one structural bar 140 of the plurality of structural bars 140 of each structural arm member 120 of the plurality of structural arm members 120 is configured to supply power to a corresponding motor 150 of the plurality of motors 150. In other words, structural bars 140 of each structural arm member 120 of the plurality of structural arm members 120 may be configured for various functionalities. For example, one structural bar 140 of a plurality of structural bars 140 may be configured to transmit control signals to an ESC 220, whereas another structural bar 140 of said plurality of structural bars 140 may be configured to supply power to a corresponding motor 150. The structural bars 140 configured to supply power to a corresponding motor 150 may be directly connected to the corresponding motor 150. For example, the structural bars 140 may be directly connected a respective winding of the corresponding motor 150. On the other hand, the structural bars 140 configured to transmit control signals to the ESC 220 may be connected to the ESC 220.

According to an example, at least one of the plurality of structural bars 140 of the plurality of structural arm members 120 may be configured to at least one of transmit and receive data. Put it differently, at least one structural bar 140 may function as an antenna. Said at least one structural bar 140 may be configured to transmit and/or receive data to and/or from e.g., the remote transmitter 230. For example, the remote transmitter 230 may transmit control data to at least one structural bar 140 configured to receive data. Thereafter, said at least one structural bar 140 may be configured to send said control data to the control unit 210, in order to control the UAV 100. Moreover, said at least one structural bar 140 may be configured to transmit data back to e.g., the remote transmitter 230. Such transmitted data by the at least one structural bar 140 to e.g., a remote transmitter may comprise UAV data, flight data, operational data, real-time data, or the like. For example, such transmitted data may comprise information of flight parameters, system health, GPS coordinates, environmental data, etc. Hence, the example allows for at least one structural bar 140 to provide structural integrity integrated with antenna functionality such as transmission and/or reception of signals such as control data and/or drone data.

The person skilled in the art realizes that the present invention by no means is limited to the preferred embodiments described above. On the contrary, many modifications and variations are possible within the scope of the appended claims. For example, the body 110, the structural arm members 120, the structural bars 140, the encapsulant 190, the bent portion 200 of the structural bars 140, etc., may have different shapes, dimensions and/or sizes than those depicted/described.

## Claims

1. An unmanned aerial vehicle (100), UAV, comprising:
a body (110);
a plurality of structural arm members (120) extending from the body, each of the plurality of structural arm members is connected to the body at a first end (130) of said structural arm member, wherein each of the plurality of structural arm members comprises a plurality of structural bars (140);
a plurality of motors (150), wherein each of the plurality of motors is arranged at a second end (160) of a corresponding structural arm member of the plurality of structural arm members;
a power source (170) arranged in the body and configured to supply power to the plurality of motors via the plurality of structural arm members; and
a plurality of propulsion arrangements (180) configured to aerially manoeuvre the UAV, wherein each of the plurality of propulsion arrangements is arranged at the second end of a corresponding structural arm member of the plurality of structural arm members, and configured to be powered by a corresponding motor of the plurality of motors;
wherein the plurality of structural bars is electrically conductive, and
wherein the plurality of structural arm members is arranged to provide structural integrity to the UAV.

2. The UAV according to claim 1, wherein each of the plurality of structural bars of each of the plurality of structural arm members extends from the first end of said structural arm member to the second end of said structural arm member.

3. The UAV according to claim 1 or 2, wherein each of the plurality of structural bars of each of the plurality of structural arm members is at least partially separately arranged each other structural bar of said plurality of structural bars.

4. The UAV according to any one of the preceding claims, wherein the motor is an electrical motor, and the power source is an electrical power source.

5. The UAV according to any one of the preceding claims, wherein the plurality of structural bars of each of the plurality of structural arm members forms a truss-shaped structure.

6. The UAV according to any one of the preceding claims, wherein the plurality of structural bars of each of the plurality of structural arm members forms a tetrahedral-shaped structure.

7. The UAV according to any one of the preceding claims, wherein the plurality of structural bars of each of the plurality of structural arm members is made of metal.

8. The UAV according to any one of the preceding claims, wherein each of the plurality of structural bars of each of the plurality of structural arm members is one of a rod and a tube.

9. The UAV according to any one of the preceding claims, wherein each of the plurality of structural bars of each of the plurality of structural arm members comprises an encapsulant (190) covering at least a portion of said structural bar.

10. The UAV according to any one of the preceding claims, wherein at least one of the connection between
each of the plurality of structural arm members and the body at the first end of said structural arm member, and
each of the plurality of structural arm members and each of the plurality of motors at the second end of said structural arm member,
is achieved by at least one of screwing, clamping, pressing, crimping, soldering, and welding.

11. The UAV according to any one of the preceding claims, wherein the connection between each of the plurality of structural arm members and the body at the first end of said structural arm member comprises a bent portion (200) of each of the plurality of structural bars of said structural arm member.

12. The UAV according to any one of the preceding claims, comprising:
a control unit (210) configured to generate control signals based on control data; and
at least one electronic speed controller (220), ESC, configured to receive the control signals from the control unit and configured to control the plurality of motors based on the control signals.

13. The UAV according to claim 12, wherein the control unit is configured to receive the control data from a remote transmitter (230), wherein the control data is configured to control the UAV.

14. The UAV according to claim 12 or 13, wherein at least one of the plurality of structural bars of each of the plurality of structural arm members is configured to transmit the controls signals to the at least one ESC.

15. The UAV according to any one of the preceding claims, wherein at least one of the plurality of structural bars of each of the plurality of structural arm members is configured to supply power to a corresponding motor of the plurality of motors.
